# EUROPEAN PATENT SPECIFICATION

(11) **EP 2 988 847 B1**
(45) Date of publication and mention of the grant of the patent: **07.03.2018**
(21) Application number: 14719734.7
(22) Date of filing: 24.04.2014
(51) Int. Cl.: B01D 39/16

(54) **FILTER SYSTEM**
FILTERSYSTEM
SYSTÈME DE FILTRATION

(30) Priority: 24.04.2013 SE 1350505; 17.03.2014 EP 14160289
(43) Date of publication of application: 02.03.2016
(73) Proprietor: C C Watertech AB, 427 42 Billdal (SE)
(72) Inventor: CAVATIN, Carina, 427 42 Billdal (SE)
(74) Representative: Awapatent AB
(86) International application number: PCT/EP2014/058368
(87) International publication number: WO 2014/174026

(56) References cited:
- EP-A1- 1 611 935
- WO-A1-2011/090397
- DE-A1- 3 024 324
- DE-A1- 3 544 404
- US-A- 4 693 799
- US-A1- 2008 070 463
- US-A1- 2009 298 371
- US-A1- 2012 149 828

## Description

### Technical field of the Invention

The present inventive concept relates to a filter system for filtering suspended particles in a liquid. The filtering system may be arranged inside a containment comprising the liquid having suspended particles, or inside a drain such as e.g. a storm water drain or a drain receiving waste water from e.g. a mine, process industry or agriculture.

### Background of the Invention

It is desirable to purify and separate suspended particles from a liquid or a fluid flow, such as e.g. a water stream. This is commonly achieved by a filter system filtering e.g. storm water in storm water drain system, waste water from mines, agriculture, storm water, process industry or other polluted liquids. The filter system may remove pollutants, debris, sand and various other solid particulates from the liquid. For example, during heavy rains, the rain water not absorbed into the ground, may flow into a drainage system such as a storm water drain system.
The rain water often holds pollutants and particles from its contact with e.g. roads and agricultural areas. These particles and pollutants are desirable to remove from the water in order for the water not to contaminate the soil and/or for reuse of the water. Waste water from industries and mines are also often polluted and in need of filtering and/or purification.

Most currently deployed filter systems today, comprises filter device which removes the pollutants by absorbing the particles and the pollutants. As filter devices with a high absorptive capacity inherently have an inefficient hydraulic capacity, they will often result in a low hydraulic conductivity through the filter devices. Some filter devices have two or several types of pores in the filter devices, from e.g. macro to micro pores. These filter devices may have higher rate of fluid flow through the filter devices as the main flow is through the macro pores while the substances are trapped in the micro pores. However, the filter devices often become clogged and are therefore in need of constant maintenance in order to function properly. The solutions to avoid clogging usually imply increased costs and high usage of external energy.

Thus, there is continuous need in the industry to provide for filter systems which reduces the need for maintenance of the filter devices.

DE3544404 discloses a filter which according to the abstract relates to: filters which work according to the deep-bed filtration principle have the drawback that their filter resistance increases the longer they are used. On the basis of a filter operating according to the principle of surface filtration, constant efficiency is ensured by the foreign particles being deposited on a low-friction, non-hygroscopic, temperature-stable surface not penetrating the interior of the filter element. Whenever fouling has reached an appropriate level, the filter element can be cleaned in a simple manner by the blow-back method.

### Summary of the Invention

In view of the above-mentioned and other drawbacks of the prior art, a general object of the present inventive concept is to provide an improved filter system requiring less maintenance due to clogged filters.

The present inventive concept is based on the insight that providing a filter system having at least one filter device which allows liquid to pass but prevents suspended particles to attach to the filter device, the suspended particles may sediment inside a containment, e.g. a drain, and may thereafter be removed from the containment. Thus, the filter device is less prone to clogging as fewer particles attach to the filter device. Pollutants of a size smaller than the suspended particles may also attach to the suspended particles and may therefore also be removed together with the suspended particles left inside the containment.

According to a first aspect of the present inventive concept, a filter system for filtering suspended particles from a liquid is provided. Said filter system comprises:
a housing having an inlet for receiving liquid, and an outlet for enabling liquid to leave said housing;
a first filter device arranged within said housing between said inlet and said outlet, said first filter device comprising a first synthetic low friction surface layer;
said first synthetic low friction surface layer comprising a plurality of pores having a first pore size allowing suspended particles of a size smaller than said first pore size to pass through said first synthetic low friction surface layer together with the liquid;
wherein said first synthetic low friction surface layer prevents a majority of the suspended particles of a size larger than said pore size to attach to said first filter device;
wherein said first synthetic low friction surface layer has been subject to thermal treatment, plasma treatment, or silicon based plasma treatment
wherein said filter system further comprises:
   a second filter device arranged upstream of said first filter device, said second filter device comprising a second synthetic low friction surface layer having a plurality of pores having a second pore size allowing suspended particles of a size smaller than said second pore size to pass through said second synthetic low friction surface layer together with the liquid, wherein said second pore size of said second synthetic low friction surface layer is larger than said first pore size of said first synthetic low friction surface layer; and
   wherein said synthetic low friction surface layer of said second filter device in said filter system comprises a hydrophobic layer and said synthetic low friction layer of said first filter device comprises a hydrophilic layer such that said hydrophobic layer is located upstream of said hydrophilic layer.

Thus, the majority of the suspended particles of a size larger than said pore size may sediment within said housing and/or within a containment housing the filter system. The sedimented particles may then be removed from the filter system and/or the containment housing the filter system, without removing the filter device and/or the filter system.

According to at least one example embodiment, the high degree of separation causes the particle concentration to increase, and thus, the suspended particles may sediment in a container or a specific collection area for the high particle concentrate in the filter separated fluid. An inner part of the bottom of this container area may then be lifted in order for the collected particles/substances to be easily transported away for e.g. combustion or for recycling.

The filter system may also remove colloid particles from the liquid. Hence, the present inventive concept provides for a filter system for removing suspended particles and/or colloid particles from liquid.

According to at least one example embodiment, the water to be filtered may pass in a vertically and/or horizontally general direction through the filter system. Hence, the filter system may be both horizontally or vertically installed.

By having a synthetic low friction surface layer comprised in the filter device, preferably as a surface layer on the filter device and arranged furthest upstream of the filter device, possibly facing the inlet of the housing and/or extending across the inlet of the housing, friction between the suspended particles and the synthetic low friction surface layer may be low enough for a majority of the suspended particles not to attach, e.g. not being adsorbed or absorbed, to the synthetic low friction surface layer. In other words, the suspended particles may rebound and/or bounce of from said filter device. According to at least one example embodiment, the synthetic low friction surface layer is comprised of a coating and/or the synthetic low friction surface layer comprises a low friction coating layer. In other words, the synthetic low friction surface layer may be coated onto another material.

According to at least one example embodiment, said filter device further comprises a synthetic carrier material for supporting said synthetic low friction surface layer, said synthetic carrier material comprising a plurality of pores having a carrier pore size at least as large as said pore size of said synthetic low friction surface layer. Hereby, liquid may be transferred through the synthetic carrier material of the filter device and further downstream of the filter device. According to at least one example embodiment, the synthetic low friction surface layer may be coated onto the synthetic carrier material.

According to at least one example embodiment, said synthetic carrier material is arranged at a distance from the synthetic low friction surface layer. For example, the distance between the synthetic carrier material and the synthetic low friction layer is between 1 mm - 5 mm. If the filter system is installed for receiving waste water from e.g. a mine or a process industry, the distance may be even larger because of less strict space limitations compared to e.g. storm water drains.

According to at least one example embodiment, said filter device comprises a natural material as wood, cotton etc. for supporting said synthetic low friction surface layer. According to at least one example embodiment, said synthetic carrier material comprises a natural material as wood, cotton etc. for supporting said synthetic low friction surface layer. Hence the synthetic low friction surface layer may be coated onto the natural carrier material.

It should be understood that the synthetic carrier material and/or the synthetic low friction surface layer need not to be comprised completely of synthetic materials, but may also comprise natural materials such as e.g. wood, cotton etc. However, according to at least one example embodiment, the synthetic carrier material and/or the synthetic low friction surface layer is/are completely comprised of synthetic materials.

According to at least one embodiment, the synthetic low friction surface layer is arranged such that the friction between the suspended particles and the synthetic low friction surface layer has a coefficient of friction lower than 0.5, preferably lower than 0.35 and more preferably lower than 0.20. Friction coefficients lower than 0.5 will hereafter be referred to as "a low friction coefficient" or "the low friction coefficient". It should be noted that the exact value of the friction coefficient between the suspended particles and the synthetic low friction surface layer is less important, as long as a majority of the suspended particles of a size larger than said pore size is prevented from attaching to said synthetic low friction surface layer and/or said filter device.

According to at least one example embodiment, the thickness of the layers, that is the synthetic low friction surface layer and/or the synthetic carrier material, may be between 1 µm and 15 µm. However, the thickness of the layers may also be larger or smaller.

According to at least one embodiment, the low friction coefficient between the suspended particles and the synthetic low friction surface layer is achieved by that at least one of the following materials is comprised in the said synthetic low friction surface layer: polypropylene, silicon based polymer, silicon oil, flexible polymer, polyester, cotton.

According to at least one embodiment, the low friction coefficient between the suspended particles and the synthetic low friction surface layer is achieved by a surface treatment of the synthetic low friction surface layer. Such surface treatment may e.g. be thermal treatment and/or treatment with silicon based compound, e.g. silicon oil. Hence, the friction between the suspended particles and the synthetic low friction surface layer may be reduced.

According to at least one example embodiment, said surface treatment is achieved by plasma treatment. In other words, the low friction surface layer is a plasma treated low friction surface layer. According to at least one example embodiment, the low friction surface layer is silicon based plasma treated. In other words, the low friction surface layer is a silicon based plasma treated low friction surface layer.

According to at least one example embodiment, said synthetic carrier material comprises at least one of the following materials: geotextile material, thermoplastic material, thermoplastic fibres, polypropylene, polyamide, polyester. According to at least one example embodiment, the synthetic carrier material comprises a non-woven geotextile material and/or a precompressed geotextile material and/or a thermal treated polypropylene material, and/or natural material such as e.g. wood and/or cotton.

The phrase "thermoplastic" should here be understood as a material which when subject to a temperature rise, the material softens and/or reshapes. This is in contrast to e.g. hard plastics such as e.g. epoxy, which does not melt but breaks when subject to a high enough temperature rise.

Geotextile materials, as e.g. non woven thermoplastic/polypropylene materials, are advantageous to use since they are relatively environmental friendly and relatively easy to use for material recycling, compared to a number of other materials, e.g. other plastic materials. The geotextile materials are also advantageous to use as they provide for an improved adhesion for surface treatment, i.e. geotextile material are suitable for surface treatment.

By using a geotextile material, e.g. heat treated polypropylene, the pore sizes of the layers, e.g. the synthetic low friction surface layer and/or the synthetic carrier material, may be more precisely defined compared to prior art filter devices.

According to at least one example embodiment, at least a part of the synthetic carrier material is forming at least a part of the synthetic low friction surface layer. For example, at least a part of a geotextile material comprised in said synthetic carrier material is forming at least a part of the synthetic low friction surface layer. The part forming the synthetic low friction surface layer may be surface treated in order to reduce the surface roughness and/or in order to change the surface properties of the synthetic low friction surface layer and thereby achieving a low friction coefficient between the suspended particles and the synthetic low friction surface layer. The surface properties may be changed by applying a friction reducing means, e.g. oil, or heat treatment of the synthetic low friction surface layer. The surface properties may also change by plasma treatment. Plasma treatment is a relatively environmental friendly method for surface treatment of the layers.

According to at least one example embodiment, said housing defines a fluid channel within said housing enabling the liquid to flow from said inlet to said outlet, said channel having a cross section, wherein said filter device extends over the whole cross section.

By letting the filter device extend across the whole cross section of the fluid channel transporting the liquid through the filter system, unfiltered liquid is prevented from by passing the filter device.

According to at least one example embodiment, said pore size of said synthetic low friction surface layer is between 0.45 µm and 100 µm.

According to at least one example embodiment, said pore size of said synthetic low friction surface layer is between 1 µm and 100 µm.

Suspended particles with a size lower than 1 µm is less prone to sediment, and hence is better filtered from the liquid by other means, e.g. by a layer of active carbon.

According to at least one example embodiment, said carrier pore size of said synthetic carrier material is between 0.45 µm and 100 µm.

According to at least one example embodiment, said carrier pore size of said synthetic carrier material is between 1 µm and 100 µm.

By using a pore size smaller than 1 µm, but larger than 0.45 µm, smaller particles compared to when using a pore size of between 1 µm and 100 µm can be filtered from the liquid. These smaller particles may e.g. bind to larger particles or be removed by the use of a flocculent. When using a pore size smaller than 1 µm, e.g. a pore size larger than 0.45 µm, the fluid pressure through the synthetic low friction surface layer and/or the synthetic carrier material should be higher compared to if a pore size of over 1 µm is used, if the same fluid capacity through the synthetic low friction surface layer and/or the synthetic carrier material is to be achieved.

According to at least one example embodiment, said filter device comprises a layer of active carbon for filtering dissolved matter from the liquid. The layer of active carbon is preferably arranged on the filter device on the opposite side of the synthetic low friction surface layer. The layer of active carbon may absorb chemicals such as e.g. metals, creosote, pesticides, suspended particles with a size smaller than 1 µm, from the liquid. The layer of active carbon may comprise a mix of active carbons and/or a mix of active carbon and another substance.

It should be noted that active carbon is sometimes referred to as activated carbon.

According to at least one example embodiment, said filter device comprises a layer of sand and/or activated carbon and/or coco fibre and/or wood for filtering dissolved matter from the liquid. Hereby, the system may for example remove organic, inorganic material, and heavy metals. However organic, inorganic material, and heavy metals may also attach to the particles and/or colloids and be comprised in the sediment as described above.

According to at least one example embodiment, said housing is tube-shaped. Hereby, the filter system and the housing may advantageously be fitted to the outlet of the containment, e.g. a drain outlet, since the outlet of the containment often is connected to an outlet pipe. Preferably, the outlet of the housing is aligned and in direct fluid contact with the outlet of the containment, e.g. the drain outlet. Liquid in the containment is directed through the filter system and the filter device before leaving the containment through the outlet of the containment. Hence, unfiltered liquid is prevented to bypass the filter system and the filter device.

According to at least one example embodiment, said filer unit is cylindrically shaped.

According to at least one example embodiment, the filter device is of a cylindrical shape. Hence, the filter device may be fitted inside a tube shaped housing. Said filter device is a first filter device, said synthetic low friction surface layer is a first synthetic low friction surface layer and said pore size is a first pore size, and said filter system further comprises:
a second filter device arranged upstream of said first filter device, said second filter device comprises a second synthetic low friction surface layer having a plurality of pores having a second pore size allowing suspended particles of a size smaller than said second pore size to pass through said second synthetic low friction surface layer together with the liquid, wherein said second pore size of said second synthetic low friction surface layer is larger than said first pore size of said first synthetic low friction surface layer.

It should be understood that the phrases "upstream" and "downstream" is referring to the fluid flow of liquid through the housing from the inlet to the outlet of the housing. "Upstream" indicates a relative position closer to the inlet of the housing and "downstream" indicates a relative position closer to the outlet of the housing.

By providing a filter system with filter devices having synthetic low friction surface layers with different pore sizes, suspended particles of different size will be hindered by the different filter devices. The second filter arranged upstream of the first filter device will hinder suspended particles of a size larger than the first filter.

According to at least one example embodiment, said housing comprises a bottom arranged between said inlet and said outlet of said housing to which said suspended particles may sediment, wherein at least a portion of said bottom between said first filter device and said second filter device is arranged with apertures having an aperture size at least as large as said second pore size of said second synthetic low friction surface layer for allowing the majority of the suspended particles of a size larger than said first pore size and smaller than said second pore size to leave said housing through said apertures.

Hereby, the suspended particles trapped between the first and the second filter devices may sediment to the bottom of the housing, and out of said housing through the apertures. By providing apertures of a size at least as large as the pore size of the second synthetic low friction surface layer, the suspended particles which has passed the second filter device are prevented from being trapped inside said housing.

The rate of sedimentation is estimated by Stokes formula: fall speed is proportional to the difference in density and the square of the diameter of the particle. The difference in density is between the particle density and fluid density.

According to at least one example embodiment, walls of said housing are impenetrable to liquid. That is, unfiltered liquid is prevented from entering the filtering system except through the inlet of the housing. A small amount of liquid may be entering the housing through the apertures in the bottom the housing, the apertures having an aperture size preventing suspended particles of a size larger than said aperture size to entering the housing of the filter system. Thus, a majority of the liquid is directed to flow from said inlet to said outlet inside said housing. According to at least one example embodiment, said housing comprises a plastic material. According to at least one example embodiment, said housing comprises a metallic material.

According to at least one example embodiment, said filter system is used for filtering dissolved particles from storm water in a storm water drain.

According to at least one example embodiment, said filter system is used for filtering dissolved particles from waste water from a mine.

According to at least one example embodiment, said filter system is used for filtering dissolved particles from waste water from an agriculture area.

According to at least one example embodiment, said filter system is used for filtering dissolved particles from water from the process industry.

If the filter system is to be used in e.g. a mine or a process industry, more layers, such as the synthetic low friction surface layers and the synthetic carrier material, may be used due to less strict space limitations compared to e.g. storm water drains.

According to at least one example embodiment, said filter system is used for filtering dissolved particles from waste water contained in a containment.

According to at least one example embodiment said filter system comprises three filter devices; a first filter device comprising a first synthetic low friction surface layer having a plurality of pores and arranged between said inlet and the said of said housing, a second filter device comprising a second synthetic low friction surface layer having a plurality of pores and arranged upstream of said first filter device, and a third filter device comprising a third synthetic low friction surface layer having a plurality of pores and arranged downstream of said first filter device. The pore size of the second synthetic low friction surface layer is larger compared to the pore size of the first synthetic low friction surface layer. The pore size of the first synthetic low friction surface layer is larger than the pore size of the third synthetic low friction surface layer. According to at least one example embodiment, at least two of the synthetic low friction surface layers have the same pore size.

According to at least one example embodiment, the synthetic carrier material and/or the synthetic low friction surface layer of the filter devices has a liquid penetration of between 15-250 l/m2/s. According to at least one example embodiment, the filter device has a liquid penetration of between 15-250 l/m2/s.

According to at least one example embodiment, the thickness of at least one, or the thickness of all, of the filter devices is between 0.35 mm and 0.95 mm.

According to at least one example embodiment, the thickness of at least one, or the thickness of all, of the filter devices is between 0.20 mm and 0.80 mm.

Thus, the at least one filter device, or all of the filter devices, may be a low weight filter device, having a weight of 1-3 kg. For example, a geotextile material comprised in the filter device may have a weight of 60-300 g/m2.

According to at least a second aspect of the present inventive concept, a filter system for filtering suspended particles from a liquid is provided. Said filter system comprises:
a filter device arranged at an outlet in a containment containing the liquid with suspended particles, said filter device comprising a synthetic low friction surface layer facing the containment and having a plurality of pores having a pore size allowing suspended particles of a size smaller than said pore size to pass through said synthetic low friction surface layer into the outlet of the containment together with the liquid;
wherein said synthetic low friction surface layer prevents a majority of the suspended particles of a size larger than said pore size to attach to said filter device.

Effects and features of this second aspect of the present inventive concept are largely analogous to those described above in connection with the first aspect of the inventive concept. Embodiments mentioned in relation to the first aspect of the present inventive concept are largely compatible with the second aspect of the inventive concept.

The suspended particles of a size larger than said first pore size are prevented from being attached to the filter device for the same reasons mentioned according to the first aspect of the present inventive concept. These suspended particles may sediment inside the containment and may be removed from the containment without removing the filter device.

According to at least one example embodiment, said filter system comprises a housing having an inlet for receiving the liquid, and an outlet for enabling the liquid to leave said housing, wherein said filter device is extending across said inlet of said housing, and wherein said outlet of said housing is aligned with the outlet of the containment.

It should be noted that the pore size of the synthetic low friction surface layer and/or the synthetic carrier material should not be interpreted as an absolute value. The pore size of a material is often referred to as a pore size interval, since it is difficult to produce a material having a uniform pore size. The pore size interval of a material may be defined as the pore size for e.g. at least 80 % of the pores in the material. Hence, material having a pore size interval between 35 µm - 50 µm may indicate that at least 80 % of the pores in the material have a pore size between 35 µm - 50 µm. Thus, it should be understood that the pore size of the synthetic low friction surface layer and/or the pore size of the synthetic carrier material of the filter device may refer to a pore size interval. For example, when stating that the synthetic low friction surface layer has a pore size of e.g. 50 µm, the pore size interval of the synthetic low friction surface layer may e.g. be between 35 µm - 50 µm, indicating that e.g. at least 80 % of the pores in the synthetic low friction surface layer have a pore size between 35 µm - 50 µm. That is, when stating that the pore size of the synthetic low friction surface layer and/or the synthetic carrier material of the filter device is of a certain value, reference may be made to an upper limit of the pore size interval of the synthetic low friction surface layer and/or the synthetic carrier material, respectively. A thicker material may often have a narrower pore size interval. By providing a synthetic low friction surface layer with a relative narrow pore size interval, the thickness of the downstream located synthetic carrier material may be smaller.

By using a hydrophobic layer, the hydrophobic characteristic of the layer will prevent particles to attach to the layer. Hence particles and/or colloids will not attach to the synthetic low friction surface layers, but rather bounce of layer. The synthetic low friction surface layer may e.g. attain its general hydrophobic characteristics by plasma treatment of the synthetic low friction surface layer with e.g. a silicon based compound, e.g. silicon oil.

The combination of a hydrophobic layer upstream and a hydrophilic layer downstream is advantageous as more particles/colloidal can be removed, e.g. compounds with different ionizations. Moreover, the fluid flow through the filter system may be further improved as the hydrophilic synthetic carrier material provides for a traction effect of the liquid through the hydrophobic synthetic low friction surface layer.

### Brief description of the drawings

The present inventive concept will now be described in more detail, with reference to the illustrative and non-limiting appended drawings showing example embodiments of the inventive concept, wherein:
fig. 1 illustrates a filter system according to at least one example embodiment of the inventive concept, where the filter system is arranged inside a drain;
fig. 2 illustrates a filter system according to at least one example embodiment of the inventive concept; and
fig. 3 schematically illustrates a filter device according to at least one example embodiment of the inventive concept.

### Detailed description of the drawings

In the following description, various aspects of the present inventive concept will be described. In presenting these aspects, embodiments will be used to illustrate features of filter systems. It should be understood that these embodiments are shown by way of example only, and are not intended to be limiting in any way. The inventive concept as defined by the appended claims may be embodied both in these and in numerous other forms. While these embodiments illustrate various combinations of elements and acts, it should be appreciated that some or all of such elements or acts may be assembled or practiced in other ways, with or without still further elements or acts, while still practicing the inventive concept.

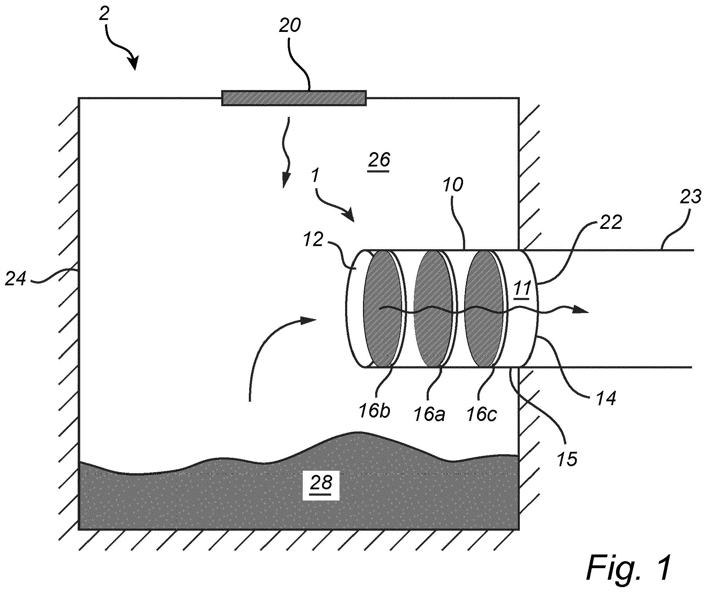

The filter system 1 in fig. 1 is arranged inside a drain 2, such as e.g. a storm water drain system. The drain 2 generally comprises a drain inlet 20 for receiving a liquid, such as e.g. water from a pavement, a drain outlet 22 for enabling transport of liquid out of the drain 2, or further downstream the drain 2, and walls 24 surrounding chamber 26 inside the drain 2. A catchbasin 28 (also known as sump or sandcatch) is arranged below the drain outlet 22, in one end of the chamber 26. The drain inlet 20 may be a grated inlet 20 provided with a grating or a grid. The drain outlet 22 may be connected to an outlet pipe 23, and provided with a grating or a grid. There may also be an additional inlet (not shown) to the chamber 26 transporting liquid from another, nearby, drain chamber.

The filter system 1 in fig. 1 comprises a housing 10, here exemplified as a tubular housing 10, having an inlet 12, an outlet 14 and a bottom 15. A first filter device 16a is arranged inside the housing 10, and upstream the first filter device 16a is second filter device 16b, hereafter referred to as an upstream filter device 16b, arranged, and downstream the first filter device 16a is a third filter device 16c, hereafter referred to as a downstream filter device 16c, arranged. The housing 10 may define a fluid channel 11 extending from the inlet 12 to the outlet 14, allowing liquid to pass through the filter system 1.

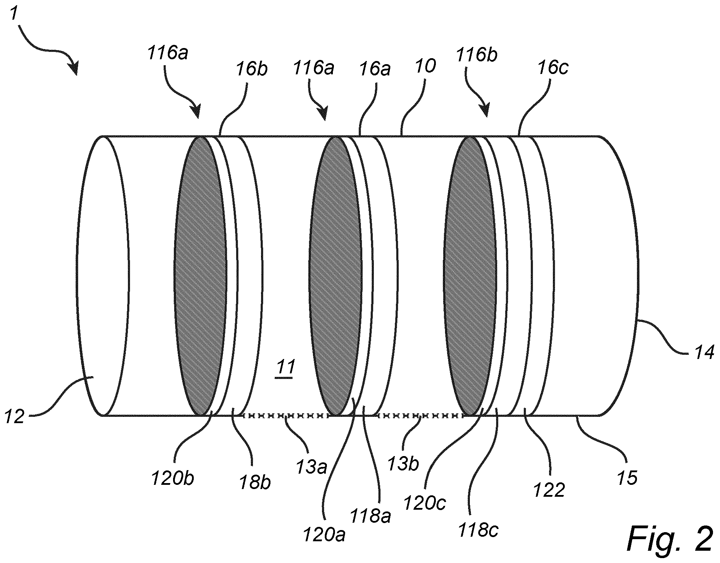

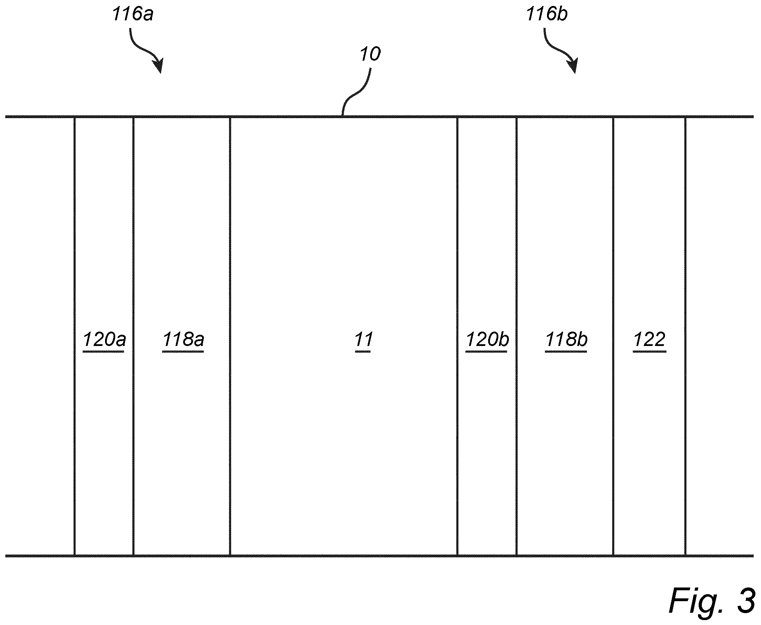

The structure of the filter system 1 in fig 1 will now be elucidated further with reference to fig. 2 and fig. 3.

As illustrated in fig. 2, the downstream filter device 16b is arranged closest to the inlet 12 of the filter devices 16a, 16b, 16c, the downstream filter device 16c is arranged closest to the outlet 14 of the filter devices 16a, 16b, 16c, and the first filter device 16a is arranged between the inlet 12 and the outlet 14, and between the upstream and the downstream filter devices 16b, 16c. Each one of the filter devices 16a, 16b, 16c extends across the whole cross section of the fluid channel 11 inside the housing 10. The filter devices 16a, 16b, 16c are here illustrated as filter disks 16a, 16b, 16c, and each filter device 16a, 16b, 16c comprises a synthetic low friction surface layer 120a, 120b, 120c having a plurality of pores. The first filter device 16a comprises a first synthetic low friction surface layer 120a having pores of a first pore size, the upstream filter device 16b comprises a second synthetic low friction surface layer 120b having pores of a second pore size, and the downstream filter device 16c comprises a third synthetic low friction surface layer 120c comprises pores of a third pore size.

It should be noted that at least one of the filter devices 16a, 16b, 16c may be arranged outside of the housing 10 and/or arranged such that the filter device 16a, 16b, 16c coincides with the inlet 12 of the filter system 1. According to at least one example embodiment, the upstream filter device 16b is arranged outside the housing 10, upstream or coinciding with the inlet 12 of the filter system 1. According to at least one example embodiment, the first filter device 16a is arranged such that it coincides with the inlet 12 of the filter system 1. It should be noted that the number of filter devices in the filter system 1 may be more or fewer than presented here. For example and according to at least one example embodiment, the filter system 1 is arranged with only one filter device, such as e.g. the first filter device 16a or the upstream filter device 16b. This filter device may be arranged outside or inside of the housing 10 or this filter device may be arranged in such a way that it coincides with the inlet 22 of the filter system 1. If the filter device is arranged outside of the housing 10, the filter device should be directly arranged to said housing 10, and extend over the whole inlet 12 of the housing 10, so no unfiltered liquid, or substantially no unfiltered liquid, may pass through the inlet 12 without passing through the filter device.

The bottom 15 of the housing 10, in figs. 1 and 2, is provided with a first set of apertures 13a having a first aperture size, and a second set of apertures 13b having a second aperture size. The first set of apertures 13a is provided in the bottom 15 between the upstream filter device 16b and the first filter device 16a. The second set of apertures 13b is provided in the bottom 15 between the first filter device 16a and the downstream filter device 16c.

In fig. 2, at least two different filter device types 116a, 116b are presented, a first filter device type 116a having a two-layered structure and a second filter device type 116b having a three-layered structure. For clarification purposes, the first filter device type 116a and the second filter device type 116b are also schematically illustrated in a side view in fig. 3.

As illustrated in figs. 2 and 3, the first filter device type 116a comprises a layer of synthetic carrier material 118a,118b such as e.g. a geotextile material, and a synthetic low friction surface layer 120a, 120b. The second filter device type 116b comprises a layer of synthetic carrier material 118c, such as e.g. a geotextile material, and a synthetic low friction surface layer 120c, similar to the first filter device type 116a. Additionally, the second filter device type 116b comprises a layer of active carbon 122. It should be noted that the layer of active carbon 122 may be comprised of a mixture of active carbons and/or a mixture of active carbon and another substance. It is also conceivable within the present inventive concept to have at least one filter device without a synthetic low friction surface layer 120a, 120b, 120c such a filter device may comprise the layer of synthetic carrier material 118a, 118b, 118c and/or the layer of active carbon 122 and/or additional layers. As illustrated in fig. 2, for each filter device 16a, 16b, 16c, the layer of synthetic carrier material 118a, 118b, 118c is arranged downstream of the synthetic low friction surface layer 120a, 120b, 120c. The synthetic carrier material 118a, 118b, 118c in each filter device 16a, 16b, 16c is supporting the synthetic low friction surface layer 120a, 120b, 120c, respectively. For the filter device 16c of the second filter device type 116b, the layer of active carbon 122 is arranged downstream of the layer of synthetic carrier material 118c. It should be noted that each layer 118a, 118b, 118c, 120a, 120b, 120c, 122 is extending over the whole cross section of the fluid channel 11, and having a cylindrical or disk shape.

Each of the layers of synthetic carrier material 118a, 118b, 118c, may also be provided with pores having a carrier pore size at least as large as the pore size of respective synthetic low friction surface layer 120a, 120b, 120c. That is a first layer of synthetic carrier material 118a may have a first carrier pore size at least as large as the first pore size of the first synthetic low friction surface layer 120a, a second layer of synthetic carrier material 118b may have a second carrier pore size at least as large as the second pore size of the second synthetic low friction surface layer 120b, and a third layer of synthetic carrier material 118c may have a third carrier pore size at least as large as the third pore size of the third synthetic low friction surface layer 120c. Hereby, liquid may flow through each synthetic low friction surface layer 120a, 120b, 120c and through each layer of synthetic carrier material 118a, 118b, 118c. According to at least one example embodiment, at least one of said synthetic low friction surface layers 120a, 120b, 120c comprise a hydrophobic layer or a hydrophilic layer. According to at least one example embodiment, the synthetic low friction surface layer 120a, 120b of at least one filter device, e.g. of the two first filter devices, in said filter system comprises a hydrophobic layer and the synthetic low friction layer 120c of another filter device in the same filter system comprises a hydrophilic layer.

According to at least one example embodiment, as illustrated in fig. 2, the first filter device type 116a is provided as the first and the upstream filter devices 16a, 16b, and the second filter device type 116b is provided as the downstream filter device 16c. It should be noted that any possible combination of the first and the second filter device types 116a, 116b, as filter devices is within the scope of the present inventive concept. For example, only one or two filter devices may be provided in the filter system 1, and each of the filter devices may be any one of the first or the second filter device type 116a, 116b. One filter device, or several other filter devices, which may not belong to the filter device types presented here, may be arranged in the filter system 1. For example, the filter system 1 may comprises one or more filter devices having fewer and/or more layers compared to the first and the second filter device types 116a, 116b of figs. 2 and 3.

The function of the filter system 1 will now be described in more detail. As illustrated in fig. 1, liquid may flow throughout the drain 2 as indicated by the curved arrows. The liquid, such as e.g. storm water, may comprise filterable matter such as suspended particles. By arranging the filter system 1 as illustrated in fig. 1, that is in such a way that the outlet 14 of the filter system 1 is directly adjacent to and aligned with the drain outlet 22, the liquid in the drain 2 is forced to pass through the filter system 1 on its way from the drain inlet 20 to the drain outlet 22. Furthermore, the walls 24 of the drain 20 are preferably substantially impenetrable to liquid, although a small amount of liquid may penetrate through the walls.

The housing 10 of the filter system is impenetrable to liquid, except for the inlet 12, the outlet 14 and the apertures 13a and 13b. Hereby, the majority of the liquid passing through the filter system 1 will flow through the fluid channel 11 within the housing 10, from the inlet 12 to the outlet 14 and through the filter devices 16a, 16b, 16c.

When the liquid comprising suspended particles flow through the upstream filter device 16b comprising the second synthetic low friction surface layer 120b having the second pore size, suspended particles of a size smaller than the second pore size are allowed to pass through the second synthetic low friction surface layer 120b and the second layer of synthetic carrier material 118b of the upstream filter device 16b together with the liquid, while suspended particles of a size larger than the second pore size will be hindered to pass through the upstream filter device 16b by the second synthetic low friction surface layer 120b, as the second synthetic low friction surface layer 120b is arranged furthest upstream of the layers of the upstream filter device 16b. The hindered particles, here the suspended particles of a size larger than the second pore size, will interact via a friction with the second synthetic low friction surface layer 120b. The second synthetic low friction surface layer 120b is chosen/arranged in such a way that the friction between the hindered particles and the second synthetic low friction surface layer 120b is low enough to prevent the hindered particles to attach to the second synthetic low friction surface layer 120b. Hereby a majority of the hindered particles, that is the suspended particles of a size larger than the second pore size, is prevented to attach to the filter device. The second synthetic low friction surface layer 120b may be chosen/arranged so that the friction between the hindered particles and the second synthetic low friction surface layer 120b has a coefficient of friction which is lower than 0.50, preferably lower than 0.35, and more preferably lower than 0.20. This may e.g. be achieved by surface treatment of the second synthetic low friction surface layer 120b with a friction reducing matter such as e.g. a silicon oil. According to at least one example embodiment, a plasma treatment with a silicon based compound, e.g. silicon oil modifies the synthetic low friction surface layer such that the surface becomes more hydrophobic compared to e.g. when using a non-plasma treated low friction surface layer. Alternatively, the second synthetic low friction surface layer 120b comprises a material providing for a low surface roughness, such as e.g. a flexible polymer material or a silicon based polymer. By having at least one filter device, in figs. 1 and 2 the upstream filter device 16b, arranged close to, or in line with, the inlet 12 of the filter system 1, the hindered particles may sediment outside the housing 10 of the filter system 1, preferably into the catchbasin 28.

As the liquid continues to flow through the filter system 1 and through the first filter device 16a comprising the first synthetic low friction surface layer 120a, suspended particles of a size smaller than the first pore size are allowed to pass through the first synthetic low friction surface layer 120a and the first layer of synthetic carrier material 118a of the first filter device 16a together with the liquid, while suspended particles of a size larger than the first pore size will be hindered to pass through the first filter device 16a by the first synthetic low friction surface layer 120a. The first synthetic low friction surface layer 120a of the first filter device 16a is chosen/arranged in a similar way as the second synthetic low friction surface layer 120b of the upstream filter device 16b, and therefore provides for a similar functionality. That is, suspended particles of a size larger than the first pore size will be prevented from attaching to the first synthetic low friction surface layer 120a of the first filter device 16a by that the friction between the hindered particles and the first synthetic low friction surface layer 120a has a coefficient of friction which is lower than 0.50, preferably lower than 0.35, and more preferably lower than 0.20. The hindered particles, here the suspended particles of a size larger than the first pore size will sediment to the bottom 15 of the housing 10. By providing the first set of apertures 13a having an aperture size at least as large as the second pore size of the second synthetic low friction surface layer 120b of the upstream filter device 16b, the particles which are trapped between the upstream filter device 16b and the first filter device 16a will sediment to the bottom 15 of the housing 10 and be able to leave the housing 10 through the first set of apertures 13a into the chamber 26 of the drain 2, e.g. into catch basin 28 or into a catch bag or catch container (not shown). It should be noted that the first pore size of the first synthetic low friction surface layer 120a of the first filter device 16a is smaller than the second pore size of the second synthetic low friction surface layer 120b of the upstream filter device 16b.

As the liquid continues to flow through the filter system 1 and through the downstream filter device 16c comprising the third synthetic low friction surface layer 120c, suspended particles of a size smaller than the third pore size are allowed to pass through the third synthetic low friction surface layer 120c and the third layer of synthetic carrier material 118c of the downstream filter device 16c together with the liquid, while suspended particles of a size larger than the third pore size will be hindered to pass through the downstream filter device 16c by the third synthetic low friction surface layer 120c. The third synthetic low friction surface layer 120c of the downstream filter device 16c is chosen/arranged in a similar way as the synthetic low friction surface layer 120a, 120b of the first and the upstream filter devices 16a 16b, and therefore provides for a similar functionality. That is, suspended particles of a size larger than the third pore size will be prevented from attaching to the third synthetic low friction surface layer 120c of the downstream filter device 16c by that the friction between the hindered particles and the third synthetic low friction surface layer 120c has a coefficient of friction which is lower than 0.50, preferably lower than 0.35, and more preferably lower than 0.20. The hindered particles, here the suspended particles of a size larger than the third pore size will sediment to the bottom 15 of the housing 10. By providing the second set of apertures 13b having an aperture size at least as large as the first pore size of the first synthetic low friction surface layer 120a of the first filter device 16a, the particles which are trapped between the first filter device 16a and the downstream filter device 16c will sediment to the bottom 15 of the housing 10 and be able to leave the housing 10 through the second set of apertures 13b into the chamber 26 of the drain 2, e.g. into catchbasin 28 or into a catch bag or catch container (not shown). The layer of active carbon 122 of the downstream filter device 16c may remove chemicals and other pollutants not hindered by the filter devices 16a, 16b, 16c. The liquid may then be transported out from the filter system 1 and into the outlet 22 and/or the outlet pipe 23 of the drain 2. It should be noted that the third pore size of the third synthetic low friction surface layer 120c of the downstream filter device 16c is smaller than the first pore size of the first synthetic low friction surface layer 120a of the first filter device 16a and smaller than the second pore size of the second synthetic low friction surface layer 120b of the upstream filter device 16b.

The pore size of the first synthetic low friction surface layer 120a of the first filter device 16a, the second synthetic low friction surface layer 120b of the upstream filter device 16b and the third synthetic low friction surface layer 120c of the downstream filter device 16c may all be chosen between 0.45 µm and 100 µm, or between 1 µm and 100 µm, for example, the second pore size of the second synthetic low friction surface layer 120b may be chosen to be between 50 µm and 100 µm, the first pore size of the first synthetic low friction surface layer 120a may be chosen between 15 µm and 50 µm, and the third synthetic low friction surface layer 120c may be chosen between 1 µm and 15 µm. The carrier pore size of the first, second and third layers of synthetic carrier material 118a, 118b, 118c may be chosen correspondingly.

By preventing that suspended particles, smaller than the pore size of the synthetic low friction surface layers 120a, 120b, 120c, attach to the filter devices 16a, 16b, 16c, and letting these suspended particles sediment in the chamber 26, preferably into the catchbasin 28, these suspended particles, and pollutants attached thereto, will be contained within the drain 2. The suspended particles contained within the drain 2 may then be removed from the drain together with sand and debris caught in the catchbasin 28 or elsewhere in the chamber 26 of the drain 2. The sand and debris removed from the drain 2, together with the suspended particles and pollutants which have been contained within the drain 2, may then be washed and cleaned in order to be reused.

According to at least one example embodiment, an outside of housing 10 is coated with a surface layer similar to the synthetic low friction surface layer 120a, 120b, 120c. Preferably, this surface layer may be arranged outside of the first set of apertures 13a and/or the second set of apertures 13b.

It should be noted that the filter devices 16a, 16b, 16c may be removed from the housing 10, without removing the housing 10 from the drain 2. For example, each of the filter devices 16a, 16b, 16c may be arranged with attachment means such as e.g. a hook, and the housing 10 may be provided with openings adjacent to each filter device 16a, 16b, 16c, to facilitate the removal of the filter devices 16a, 16b, 16c from the housing 10.

It should be noted that between the inlet 20 of the drain 2 and the filter system 10, a grating or a grid may be arranged to filter debris and larger pollutants in order not to damage the filter devices in the filter system 10.

It should be understood that the drain 2 described here is not limiting the inventive concept by any means and may, or may not, comprise all elements mentioned here. The drain 2 may simply be a containment containing liquid comprising suspended particles. The filter system may be used for filtering suspended particles from a liquid in e.g. mines or the process industry.

When the filter system is installed for receiving waste water from e.g. a mine or a process industry, more layers, such as the synthetic low friction surface layer and/or the synthetic carrier material may be used because of less strict space limitations compared to e.g. when the filter system is installed in a storm water drain. However, the principle, as e.g. described in relation to figs. 1-3 is the same as for a filter system installed in a storm water drain.

## Claims

1. A filter system (1) for filtering suspended particles from a liquid, said filter system comprising:
a housing (10) having an inlet (12) for receiving liquid, and an outlet (14) for enabling liquid to leave said housing;
a first filter device (16a, 116a) arranged within said housing between said inlet and said outlet, said first filter device comprising a first synthetic low friction surface layer (120a);
said first synthetic low friction surface layer comprising a plurality of pores having a first pore size allowing suspended particles of a size smaller than said first pore size to pass through said first synthetic low friction surface layer together with the liquid;
wherein said first synthetic low friction surface layer prevents a majority of the suspended particles of a size larger than said first pore size to attach to said first filter device;
wherein said first synthetic low friction surface layer has been subject to thermal treatment, plasma treatment, or silicon based plasma treatment
wherein said filter system further comprises:
a second filter device (16b, 116b) arranged upstream of said first filter device, said second filter device comprising a second synthetic low friction surface layer (120b) having a plurality of pores having a second pore size allowing suspended particles of a size smaller than said second pore size to pass through said second synthetic low friction surface layer together with the liquid, wherein said second pore size of said second synthetic low friction surface layer is larger than said first pore size of said first synthetic low friction surface layer; and
wherein said second synthetic low friction surface layer of said second filter device in said filter system comprises a hydrophobic layer and said first synthetic low friction layer of said first filter device comprises a hydrophilic layer such that said hydrophobic layer is located upstream of said hydrophilic layer.

2. A filter system (1) according to claim 1, wherein said first filter device further comprises a synthetic carrier material (118a) for supporting said first synthetic low friction surface layer, said synthetic carrier material comprising a plurality of pores having a carrier pore size at least as large as said first pore size of said first synthetic low friction surface layer.

3. A filter system (1) according to claim 2, wherein said synthetic carrier material comprises at least one of the following materials: geotextile material, thermoplastic fibres, polypropylene, polyamide, polyester.

4. A filter system (1) according to any one of the preceding claims, wherein said housing defines a fluid channel (11) within said housing enabling the liquid to flow from said inlet to said outlet, said channel having a cross section, wherein said first filter device extends over the whole cross section.

5. A filter system (1) according to any one of the preceding claims, wherein said first pore size of said first synthetic low friction surface layer is between 0.45 µm and 100 µm, preferably between 1 µm and 100 µm.

6. A filter system (1) according to any one of the preceding claims, wherein said first filter device comprises a layer of active carbon (122) for filtering dissolved matter from the liquid.

7. A filter system (1) according to any one of the preceding claims, wherein said housing is tube-shaped.

8. A filter system (1) according to any one of the preceding claims, wherein said housing comprises a bottom (15) arranged between said inlet and said outlet of said housing to which said suspended particles may sediment, wherein at least a portion of said bottom between said first filter device and said second filter device is arranged with apertures (13a) having an aperture size at least as large as said second pore size of said second synthetic low friction surface layer for allowing the majority of the suspended particles of a size larger than said first pore size and smaller than said second pore size to leave said housing through said apertures.

9. A filter system according to any one of the preceding claims, wherein walls (24) of said housing are impenetrable to liquid.

10. Use of a filter system (1) according to any one of the preceding claims for filtering dissolved particles from storm water in a storm water drain (2).

## Patentansprüche

1. Filtersystem (1) zum Filtern von suspendierten Partikeln aus einer Flüssigkeit, wobei das Filtersystem umfasst:
ein Gehäuse (10) mit einem Einlass (12) zum Aufnehmen von Flüssigkeit und einen Auslass (14), um zu ermöglichen, dass Flüssigkeit das Gehäuse verlässt;
eine erste Filtervorrichtung (16a, 116a), die innerhalb des Gehäuses zwischen dem Einlass und dem Auslass angeordnet ist, wobei die erste Filtervorrichtung eine erste synthetische Oberflächenschicht mit niedriger Reibung (120a) umfasst;
wobei die erste synthetische Oberflächenschicht mit niedriger Reibung eine Mehrzahl von Poren mit einer ersten Porengröße aufweist, die es suspendierten Partikeln mit einer Größe, die kleiner als die erste Porengröße ist, ermöglicht, die erste synthetische Oberflächenschicht mit niedriger Reibung zusammen mit der Flüssigkeit zu passieren;
wobei die erste synthetische Oberflächenschicht mit niedriger Reibung verhindert, dass ein Großteil der suspendierten Partikel mit einer Größe, die größer als die erste Porengröße ist, an der ersten Filtervorrichtung anhaftet;
wobei die erste synthetische Oberflächenschicht mit niedriger Reibung einer thermischen Behandlung, Plasmabehandlung oder einer silikonbasierten Plasmabehandlung unterzogen worden ist;
wobei das Filtersystem ferner umfasst:
eine zweite Filtervorrichtung (16b, 116b), die vorgelagert zu der ersten Filtervorrichtung angeordnet ist, wobei die zweite Filtervorrichtung eine zweite synthetische Oberflächenschicht mit niedriger Reibung (120b) mit einer Mehrzahl von Poren mit einer zweiten Porengröße umfasst, die es suspendierten Partikeln mit einer Größe, die kleiner als die zweite Porengröße ist, ermöglicht, die zweite synthetische Oberflächenschicht mit niedriger Reibung zusammen mit der Flüssigkeit zu passieren, wobei die zweite Porengröße der zweiten synthetischen Oberflächenschicht mit niedriger Reibung größer ist als die erste Porengröße der ersten synthetischen Oberflächenschicht mit niedriger Reibung; und
wobei die zweite synthetische Oberflächenschicht mit niedriger Reibung der zweiten Filtervorrichtung in dem Filtersystem eine hydrophobe Schicht umfasst und die erste synthetische Oberflächenschicht mit niedriger Reibung der ersten Filtervorrichtung eine hydrophile Schicht umfasst, derart, dass sich die hydrophobe Schicht vorgelagert zu der hydrophilen Schicht befindet.

2. Filtersystem (1) nach Anspruch 1, wobei die erste Filtervorrichtung ferner ein synthetisches Trägermaterial (118a) zum Tragen der ersten synthetischen Oberflächenschicht mit niedriger Reibung umfasst, wobei das synthetische Trägermaterial eine Mehrzahl von Poren mit einer Trägerporengröße umfasst, die mindestens so groß ist wie die erste Porengröße der ersten synthetischen Oberflächenschicht mit niedriger Reibung.

3. Filtersystem (1) nach Anspruch 2, wobei das synthetische Trägermaterial mindestens eines der folgenden Materialien umfasst: Geotextilmaterial, thermoplastische Fasern, Polypropylen, Polyamid, Polyester.

4. Filtersystem (1) nach einem der vorhergehenden Ansprüche, wobei das Gehäuse einen Fluidkanal (11) innerhalb des Gehäuses definiert, der es ermöglicht, dass die Flüssigkeit von dem Einlass zu dem Auslass strömt, wobei der Kanal einen Querschnitt aufweist, wobei sich die erste Filtervorrichtung über den gesamten Querschnitt erstreckt.

5. Filtersystem (1) nach einem der vorhergehenden Ansprüche, wobei die erste Porengröße der ersten synthetischen Oberflächenschicht mit niedriger Reibung zwischen 0,45 µm und 100 µm liegt, vorzugsweise zwischen 1 µm und 100 µm.

6. Filtersystem (1) nach einem der vorhergehenden Ansprüche, wobei die erste Filtervorrichtung eine Aktivkohleschicht (122) zum Filtern gelöster Stoffe aus der Flüssigkeit umfasst.

7. Filtersystem (1) nach einem der vorhergehenden Ansprüche, wobei das Gehäuse rohrförmig ist.

8. Filtersystem (1) nach einem der vorhergehenden Ansprüche, wobei das Gehäuse einen zwischen dem Einlass und dem Auslass des Gehäuses angeordneten Boden (15) aufweist, an dem sich die suspendierten Partikel absetzen können, wobei mindestens ein Teil des Bodens zwischen der ersten Filtervorrichtung und der zweiten Filtervorrichtung mit Öffnungen (13a) versehen ist, die eine Öffnungsgröße aufweisen, welche mindestens so groß wie die zweite Porengröße der zweiten synthetischen Oberflächenschicht mit niedriger Reibung ist, um zu ermöglichen, dass ein Großteil der suspendierten Partikel mit einer Größe, die größer als die erste Porengröße und kleiner als die zweite Porengröße ist, das Gehäuse durch die Öffnungen hindurch verlässt.

9. Filtersystem (1) nach einem der vorhergehenden Ansprüche, wobei Wände (24) des Gehäuses undurchlässig für Flüssigkeit sind.

10. Verwendung eines Filtersystems (1) nach einem der vorhergehenden Ansprüche zum Filtern gelöster Partikel aus Regenwasser in einem Regenwasserabfluss (2).

## Revendications

1. Système de filtre (1) pour le filtrage de particules suspendues à partir d'un liquide, ledit système de filtre comprenant :
un boîtier (10) possédant une entrée (12) pour recevoir le liquide, et une sortie (14) pour permettre au liquide de s'échapper dudit boîtier ;
un premier dispositif de filtre (16a, 116a) agencé au sein dudit boîtier entre ladite entrée et ladite sortie, ledit premier dispositif de filtre comprenant une première couche superficielle synthétique de faible frottement (120a) ;
ladite première couche superficielle synthétique de faible frottement comprenant une pluralité de pores possédant une première taille de pore permettant aux particules suspendues d'une taille inférieure à ladite première taille de pore de passer à travers ladite première couche superficielle synthétique de faible frottement ensemble avec le liquide ;
dans lequel ladite première couche superficielle synthétique de faible frottement empêche une majorité des particules suspendues d'une taille supérieure à ladite première taille de pore de s'attacher audit premier dispositif de filtre ;
dans lequel ladite première couche superficielle synthétique de faible frottement a été sujette à un traitement thermique, un traitement au plasma, un traitement au plasma à base de silicium
dans lequel ledit système de filtre comprend en outre :
un second dispositif de filtre (16b, 116b) agencé en amont dudit premier dispositif de filtre, ledit second dispositif de filtre comprenant une seconde couche superficielle synthétique de faible frottement (120b) possédant une pluralité de pores possédant une seconde taille de pore permettant aux particules suspendues d'une taille inférieure à ladite seconde taille de pore de passer à travers ladite couche superficielle synthétique de faible frottement ensemble avec le liquide, dans lequel ladite seconde taille de pore de ladite couche superficielle synthétique de faible frottement est supérieure à ladite première taille de pore de ladite première couche superficielle synthétique de faible frottement ; et
dans lequel ladite seconde couche superficielle synthétique de faible frottement dudit second dispositif de filtre dans ledit système de filtre comprend une couche hydrophobe et ladite première couche synthétique de faible frottement est située en amont de ladite couche hydrophile.

2. Système de filtre (1) selon la revendication 1, dans lequel ledit premier dispositif de filtre comprend en outre un matériau de support synthétique (118a) pour le support de ladite première couche superficielle synthétique de faible frottement, ledit matériau de support synthétique comprenant une pluralité de pores possédant une taille de pore de support au moins aussi large que ladite première taille de pore de ladite première couche superficielle synthétique de faible frottement.

3. Système de filtre (1) selon la revendication 2, dans lequel ledit matériau de support synthétique comprend au moins un des matériaux suivants : un matériau géotextile, des fibres thermoplastiques, du polypropylène, du polyamide, du polyester.

4. Système de filtre (1) selon l'une quelconque des revendications précédentes, dans lequel ledit boîtier défini un canal fluidique (11) au sein dudit boîtier permettant au liquide de s'écouler à partir de ladite entrée vers ladite sortie, ledit canal possédant une section transversale, dans lequel ledit premier dispositif de filtre s'étend sur la section transversale complète.

5. Système de filtre (1) selon l'une quelconque des revendications précédentes, dans lequel ladite première taille de pore de ladite première couche superficielle synthétique de faible frottement est comprise entre 0,45 µm et 100 µm, de préférence comprise entre 1 µm et 100 µm.

6. Système de filtre (1) selon l'une quelconque des revendications précédentes, dans lequel ledit premier dispositif de filtre comprend une couche de carbone actif (122) pour le filtrage de la matière dissoute à partir du liquide.

7. Système de filtre (1) selon l'une quelconque des revendications précédentes, dans lequel ledit boîtier est en forme de tube.

8. Système de filtre (1) selon l'une quelconque des revendications précédentes, dans lequel ledit boîtier comprend un fond (15) agencé entre ladite entrée et ladite sortie dudit boîtier sur lesquelles lesdites particules suspendues peuvent sédimenter, dans lequel au moins une partie dudit fond entre ledit premier dispositif de filtre et ledit second dispositif de filtre est agencée avec des ouvertures (13a) possédant une taille d'ouverture au moins aussi large que ladite seconde taille de pore de ladite seconde couche superficielle synthétique de faible frottement pour permettre à la majorité des particules suspendues d'une taille supérieure à ladite première taille de pore et inférieure à ladite seconde taille de pore de s'échapper dudit boîtier à travers lesdites ouvertures.

9. Système de filtre (1) selon l'une quelconque des revendications précédentes, dans lequel les parois (24) dudit boîtier sont impénétrables aux liquides.

10. Utilisation d'un système de filtre (1) selon l'une quelconque des revendications précédentes pour le filtrage de particules dissoutes provenant d'eau pluviale d'orage dans un drainage d'eau pluviale d'orage (2).
